# EUROPEAN PATENT APPLICATION

(11) **EP 2 857 256 A1**
(43) Date of publication of application: **08.04.2015**
(21) Application number: 13187057.8
(22) Date of filing: 02.10.2013
(51) Int. Cl.: B60M 1/28, B60M 1/13, H01B 7/32

(54) **Network system**

(71) Applicant: Nearic Business Solutions, 1060 NM Amsterdam (NL)
(72) Inventor: Petres, Dion Manuel, 1060 NM Amsterdam (NL)
(74) Representative: De Vries & Metman

(57) **Abstract**

A network system is provided comprising an electrical cable (7) and a power source (15) connected to the cable for transmitting electrical power through the cable. The cable comprises an electrical conductor and an optical fibre extending along the conductor. Such cable and a method are also provided.

## Description

### TECHNICAL FIELD

The present disclosure relates to network systems, in particular to increasing security and/or reliability of such system with respect to physical corruption of the cables. Further, the present disclosure relates to communication systems.

### BACKGROUND

Presently, significant numbers of networks exist for which metallic electrical conductors are installed in places where they are accessible for unauthorised persons. Typical examples are electricity cables and communication lines. Unfortunately, in view of actual or perceived scarcity and value, this has led to an increasing occurrence of theft of electrical conductors for the scrap-worth of the material. Obviously this results in soaring costs for repairs and/or replacement of both the conductors and the communication systems etc. relying on the conductors. Communication lines of public transportation systems, e.g. railway systems are particularly vulnerable, since the cables tend to lie adjacent the tracks and the tracks cannot be feasibly fenced or otherwise protected due to their sheer size and interconnections with other forms of public life, such as stations, traffic crossings, etc. In such cases the damage may cause stranding to hundreds to thousands members of the public.

Systems providing improved security and/or reduced downtime are therefore eagerly desired, wherein installation and/or operating costs are an important factor.

### SUMMARY

Herewith, a network security system is provided, comprising an electrical power cable and a power source connected to the cable for transmitting electrical power through the cable. The cable comprises an electrical conductor and an optical fibre extending along. In particular the electrical conductor and the optical fibre form an integral cable.

Thus, two largely independent power and signal conductors are combined into an integral cable.

Forming the cable as an integral object provides that any damage to the conductor and the fibre in the cable is very likely to occur in one place, so that accurate localisation of the damage is facilitated (see below). Further, this improves manipulation of the cable for installation, maintenance and/or repair. Moreover, optical fibres, be they glass or plastic, and electrical conductors which are generally metallic, physically reinforce each other so that the cable, and thus the network system, has increased robustness.

The cable can be used for data transmission in addition to DC and/or AC electrical power transmission. Either transmission technique (electrical or optical) can be used to detect damage per se; if a signal of either form transmitted from a first position through the cable towards a second position but does not reach the second position, the transmission line is interrupted. Unfortunately this will generally mean that the cable is broken and one or more parts may have been stolen.

A benefit of an optical line over an electrical line is that a single fibre may suffice for detecting not only the interruption per se, but also the location of the interruption. The cable may comprise a plurality of optical fibres.

Whereas for electrical signals a current loop is required, a broken fibre end may cause reflection of a part of an optical signal travelling through the fibre that is sufficiently strong to be detected at the entrance location. Further, optical fibres may be provided with integrated reflectors and/or other active or passive optical means which may be used for detecting travelling distance within the fibre. Thus, the location of the transmission interruption may be readily detected allowing accurate pinpointing of action, e.g. direction of police forces and/or service personnel towards the interruption site.

Moreover, optical signals may cost less energy for generation and/or detection than electrical signals and electrical and optical signals do not interfere with each other so that a high signal robustness is achievable.

In an embodiment, at least part of the fibre is included within the conductor. This protects the fibre from external influences and facilitates access to the conductor. It may also mask the existence of the fibre, preventing alerting a prospective thief and increasing chances of successful security and/or police action during a criminal act.

In a particular embodiment, the conductor is provided with a recess wherein the fibre is arranged in the recess. This enables provision of a robust cable. The conductor may comprise a cavity, e.g. a slit in which the fibre fits, whereas the conductor may otherwise be massive. In a particular embodiment the recess is generally closable, e.g. by deforming (part of) the conductor.

In an embodiment, at least part of the fibre is wound around at least part of the conductor. In particular, the fibre may be covered by and/or be incorporated in a sheath surrounding the conductor. It is noted that several extremely durable material types of plastics and/or glass are available which are light-transmitting in sufficiently high amounts for signal transmission. Thus, the conductor need not be provided with a recess at the respective position(s). Further, the fibre may serve as protection and/or (electrical) insulation for the conductor instead. Incorporation of the fibre by or even in a sheath secures the relative position of the conductor and fibre.

In an embodiment, at least part of the cable is comprised in a power supply line, wherein in particular at least part of the cable is part of a transportation system, in particular as an overhead power supply line, such as to power a (public) transportation means for traction, e.g. a train, a tram, a trolley bus and/or a metro car. Thus, a transportation system conductor is protected, at least interruption is quickly and accurately detectable and downtime -causing delays- can be reduced. In case the conductor carries a voltage of several thousands of volts and potentially tens to hundreds of amperes or over, additional protection against tampering with the cable is provided.

The power supply may be DC or AC, wherein DC may be preferred since this tends to result in lower losses for long-distance and high-power transmission. Further, in some cases DC fields disturb optical signals even less than AC fields.

In an embodiment, the network system comprises a plurality of electrical conductors each comprising one or more optical fibres extending along the respective conductors, at least two of the electrical conductors forming part of a common current loop. Thus a protected current loop is provided.

The network system may comprise a plurality of detection stations along the cable, provided with one or more optical detection signal sources and/or detectors operably connected to the optical fibre. Thus, detection signals may be transmitted through the optical fibre to test integrity and/or quality of the cable. To facilitate localisation of a possible disturbance or interruption, at least part of the network system may be binned by dividing the system, or at least the cable, in segments provided with their proper optical detection signal sources and/or detectors. Further, this helps counteracting signal quality loss due to inevitable optical signal dispersion and -loss in the fibre.

The network system may comprise a plurality of communication stations along the cable, provided with one or more communication signal transmitters and/or communication signal receivers operably connected to the optical fibre, for transmission of optical communication signals through that. Preferably the communication signal transmitters and/or communication signal receivers are configured for communication with a further communication system, in particular a remote communication system, such as a wireless system, e.g. a mobile telecommunications network. The communication may comprise detection signal communication, which may be simplified if at least some detection stations and communication stations are integrated into single stations with combined functionality, but more interesting is communication of/about other topics and/or in other forms. It is to be noted that optical communication through a single physical fibre may occur concurrently over different logical channels with do not interact, e.g. using different signal sampling protocols, different optical wavelengths etc. Thus, part of the available bandwidth can be used for detection signals investigating cable integrity and another part of the bandwidth could be used differently, e.g. being offered for public communication and/or networking. The latter part may be significantly larger than the former part.

At least one of the communication signal transmitters and/or the communication signal receivers may be formed for transmitting and/or receiving communication signals over different logical communication channels such as different optical frequencies, interleaved signal sequences, etc. This facilitates communication different (sets of) signals and/or between different stations in parallel. Suitably, one logical channel is used for a detection signal and other logical channels are used for other data. It is noted that (access to) one or more individual data channels may be granted to different users e.g. supplying different content to other users along different, non-interacting, logical channels.

At least some of the stations may be configured for transmitting detection and/or communication signals via different signal conductors, e.g. different optical fibres. Thus, each of the respective stations is provided with redundancy with regard to transmission of signals so that an interruption of the cable does not necessarily lead to interruption of transmission of a signal per se. This is in particular relevant for communication signals which should preferably be independent from the detection signals. A suitable manner is by transmitting the respective signals in two directions along the cable towards different receivers, which may be coupled with another (part of a) communications system, e.g. a telephone system, a wireless communication system and/or an internet connection.

In an embodiment, at least one, preferably each, detection station and/or communication station is assigned an identifier, e.g. a name and/or an address, which is unique within the network system, the address preferably being changeable by means of one or more hardware and/or software settings. Thus, the station is identifiable which facilitates accurate localisation of an interruption. Further, communication signals may be directed to such station, facilitating routing of a signal and/or delivery of a signal to a client.

In an embodiment, the network system comprises a control unit, possibly integrated into a detection and/or communication station, and the control unit is configured to communicate with one or more detection and/or communication stations, preferably being configured for two-way communication, to determine at least one signal transmission parameter and to generate a control signal in dependency of the determined signal transmission parameter. Thus, the control unit can receive detection signals and/or communication signals from the station(s), providing status information about the integrity of the cable and provide a corresponding status indication or warning signal. In a particular embodiment the control unit and the at least some of the stations are configured for two-way communication, e.g. for responding to a status request. Plural parameters may be determined, such as signal transmission per se, a signal - to - noise ratio, etc. In an advantageous embodiment, the control unit is configured for transmitting the control signal to a remote signalling device so that eventual warning signals can be transmitted to a remote receiver, e.g. a personal mobile device such as a mobile telephone. The warning signal may comprise status information such as the nature of the detected parameter and/or a deviation from a set value, a station identifier, an error location along the cable etc. The warning signal may interact with a program on the remote device, e.g. in the form of a specific "app".

In an embodiment, the network system comprises a plurality of data warehouses operably connected to the optical fibre for transmission of data from and/or to the respective data warehouses. In a particular network system, one or more data warehouse may be connected to one or more control units, detection stations and/or communication stations, where applicable. A data warehouse or enterprise data warehouse (DW, DWH, or EDW), generally known per se, is a database used for reporting and data analysis, and may in particular be a central repository of data which is created by integrating data from one or more disparate sources. Thus, the network system may be provided with several degrees of redundancy and a particularly reliable network system is provided.

In a particular embodiment, the network system is part of a network comprising one or more client connections and server connections for communication between at least some clients and/or servers connected to the connections via the optical fibre of the cable. Thus, a secure hardware component to the network is provided.

In another aspect, a cable for a network system as described herein is provided, comprising an electrical conductor formed as an overhead power supply line of a transportation system such as a railway, tramway, trolley car or metro, wherein the cable comprises an optical fibre extending along the conductor, the electrical conductor and the optical fibre forming a cable as an integral object, wherein at least part of the fibre is included within the conductor, wherein in particular the conductor is provided with a recess wherein the fibre is arranged in the recess. Such cable facilitates detection of interruptions, signalling of tampering and/or (attempted) theft, and allows using the cable for data transmission for communication.

Further, use of the network system according to present disclosure is provided herewith, comprising transmitting an optical signal through the optical fibre, determining a signal transmission parameter and generating a signal in dependency of the determined signal transmission parameter. This facilitates maintenance, control and security of the system.

### BRIEF DESCRIPTION OF THE DRAWINGS

The above-described aspects will hereafter be more explained with further details and benefits with reference to the drawings showing an embodiment of the invention by way of example.
Fig. 1 indicates part of an embodiment of a network system;
Fig. 2 shows an overhead power cable of the network system of Fig. 1;
Fig. 3 shows a ground cable of the network system of Fig. 1.

### DETAILED DESCRIPTION OF EMBODIMENTS

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral.

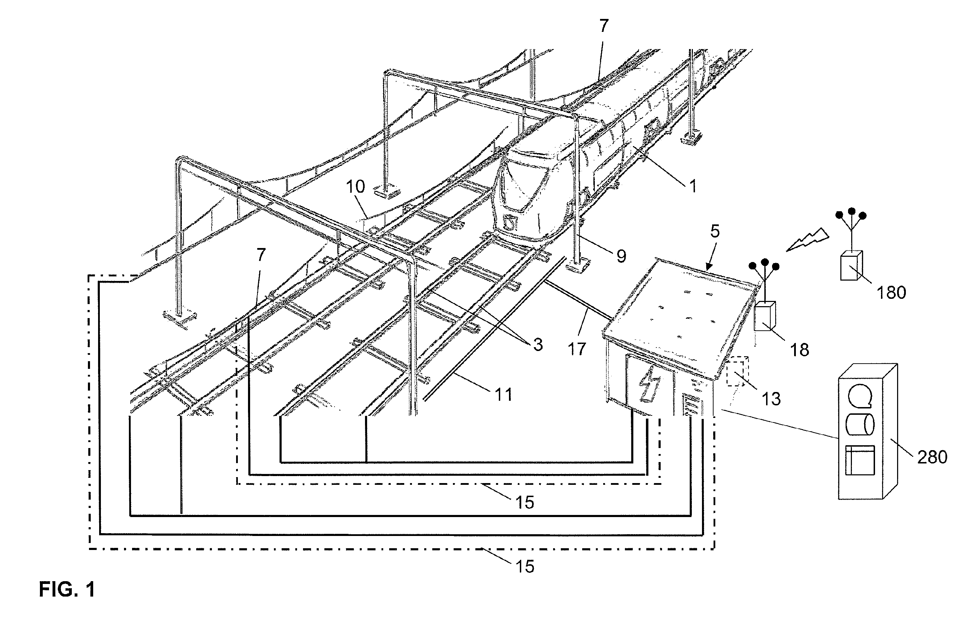

Fig. 1 shows a train 1 on rails 3 of a track. The train 1 is electrically powered via a power network system from a power source, here in a power cabinet 5, connected to an overhead power supply cable 7 to which the train 1 connects with a top contact or pantograph (not shown). The overhead power supply cable 7 is supported from portals 9 and support cables 10. Return current is led through the train 1 and via its wheels trough the rails 3. The adjacent track is similarly arranged. Adjacent and along the rails 3 of each track a communication cable 11 for communication, controlling switches and/or other apparel is provided. Also, a current return line may be provided in addition to the rails 3 and/or as another line adjacent the power supply cable 7.

As will be discussed in more detail below, in this embodiment, in each of the power supply cable 7 and the communication cable 11 an optical fibre is integrated along with the electrical conductor.

The respective optical fibres 7, 11 are connected to stations 13 along the track, here being included in the power cabinet 5, via suitable connection portions 15, 17.

The power cabinet 5 further comprises one or more optional transmitters and/or receivers for connection to a further communication system, in particular a remote communication system, e.g. a device 18 for wireless communication, e.g. one- bi-directional communication with a mobile telephone network for transmitting data, text messages and/or voice communication, to a remote signalling device such as a mobile telephone or Personal Digital Assistant (PDA) 180, but a connection to a further cable-based communication network and/or to a data warehouse (280) are also conceivable.

The station 13 and/or device 18 may be formed differently e.g. as a box or cabinet mounted on a portal 9 or elsewhere.

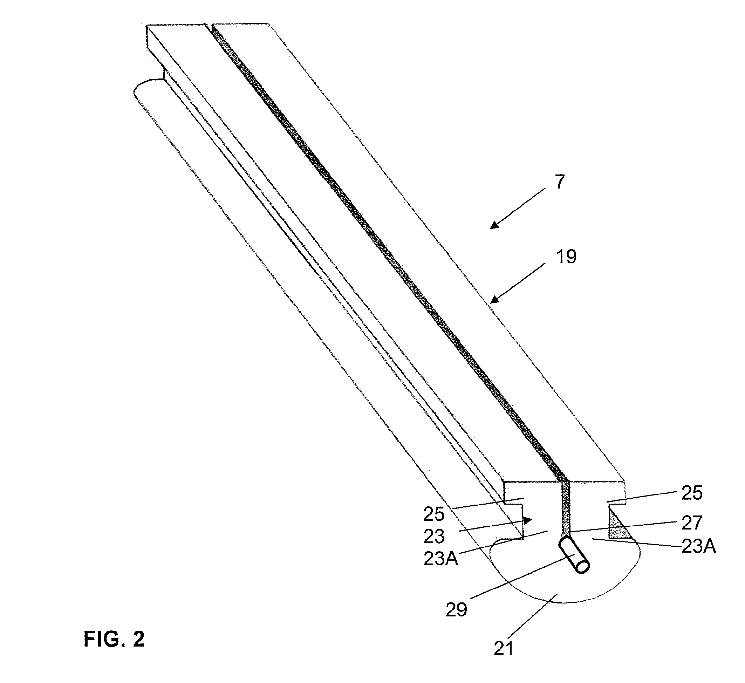

Fig. 2 is a perspective view of an overhead power supply cable 7 for trains etc. comprising a conductor 19 of customary shape for an overhead power supply cable 7, but adapted for use in the system disclosed herein. The conductor 19 of the cable 7 has, in use, a generally inverted mushroom-shape with a relatively wide and rounded contact portion 21 (the head of the mushroom shape) for contacting the top contact or pantograph of the train 1 and a relatively narrow neck 23 (the stem of the mushroom shape) for attachment to a supporting construction, e.g. by clamping, but bolting, riveting, welding etc. is also conceivable. Generally the neck 23 may be tapering in cross section towards the contact portion 21, but here, the neck 23 is substantially straight and provided with protruding flanges 25 for engagement of clamps. Thus formed, the conductor 19 may fit European railway systems. However, details of the conductor shape may vary without departing from the scope of this disclosure, although it is noted that the scope of protection is determined by the appended claims.

In the shown embodiment, the conductor 19 is a substantially massive or monolithic wire provided with a recess in the form of a slot 27 extending into the conductor 19 and separating the neck 23 into two opposing neck portions 23A. Such slot may be formed when forming the conductor 19, e.g. by a suitably formed extrusion die and/or by milling a slot into the formed conductor. The latter method facilitates refurbishing and/or retrofitting an existing conductor. The recess 27 extends into the contact portion 21. The optical fibre 29 is received in (the deepest portion of) the recess 27. When the conductor 19 is suspended from clamps acting on the neck 23 and flanges 25, the slot 27 is pressed shut and the fibre 29 is reliably fixed and protected from the environment.

Any attempt to cut the cable 7 with a fibre 29 in such conductor 19 will be detectable by monitoring optical transmission of signals through the fibre 29.

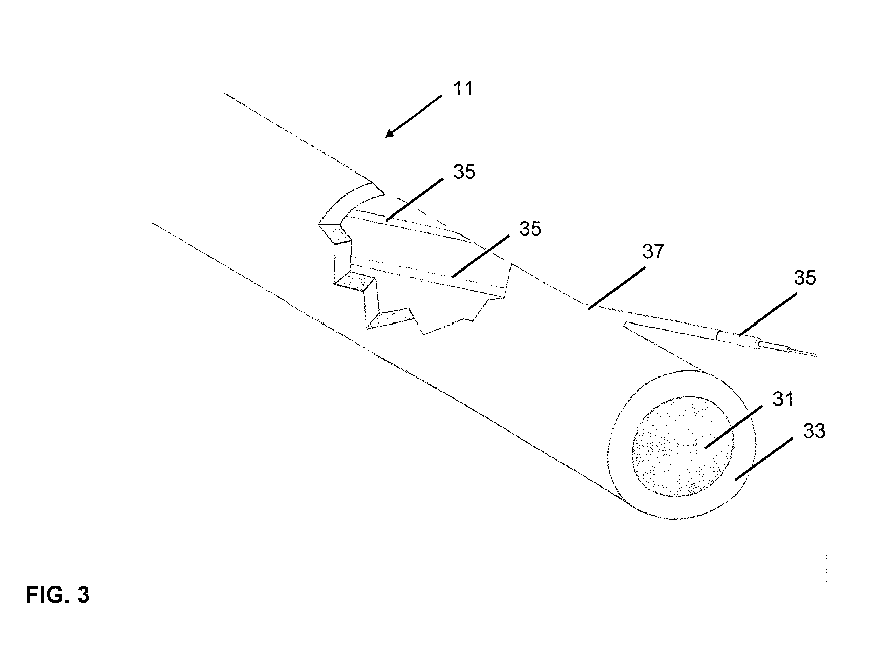

Fig. 3 shows a suitable embodiment for the communication cable 11. The cable 11 comprises a core 31 with one or more electrical conductors (not shown) surrounded by an optional sheath 33. An optical fibre 35 is helically wound around the core 31 of the cable 11. Possibly, more optical fibres 35 are provided which may be half a turn offset as indicated here. This provides an increased winding density, interruption detection redundancy and increased communication transmission bandwidth. Here, the optical fibre 35 is arranged underneath the sheath. This protects the fibre 35. To access the fibre 35, an exit port 37 may be provided in the sheath, as shown here. Alternatively, the fibre and the conductive core may be provided in separate, but joined, sheath portions. However, this provides a clear indication to a prospective thief of the position of the optical fibre with respect to the electrical conductor that is the object of desire. Winding the fibre 35 around the conductive core facilitates manufacturing, repair and recycling of the cable compared to an arrangement wherein the optical fibre would be integrated into a wound conductor core.

Considering the cables of Figs. 2-3, it will be clear that separate electrical and optical signals and/or offset voltages may be provided. Since optical fibres do not normally conduct electricity, fibre portions 15, 17 extending from (the conductors in) the respective cables, workers can easily manipulate the optical fibres to establish, maintain and/or repair optical communication facilities connected to the fibres. For this, standard optical connectors and/or signal manipulation devices may be employed.

Discernible from Fig. 1 is that the power cabinet 5 is connected with the cables 7, 11 with a T-junction, so that signals of one station can be transmitted in two opposite directions so that chances of successful signal transmission to a remote station are improved, in particular if the system comprises one or more looped connection arrangements wherein a number of stations are connected in a closed loop. In such case, it is preferred that at least some of the stations be connected to further loops or cells of a similar system part as well.

In one or more power cabinets 5 or other type stations, connections to the system may be made from outside the system to include the system in a larger network. Such stations may be arranged at endpoints of cables and/or at other desired positions. Depending on the circumstances, a station separation along a cable of about 0.25-5 km, in particular 0.5-1 km appears to provide a reasonable optimum between the (somewhat conflicting) demands of high spatial detection resolution, high connection density for clients for communication of data through the fibre, and acceptable numbers of connection points and costs.

The invention is not restricted to the above described embodiments which can be varied in a number of ways within the scope of the claims. For instance relative and absolute sizes, shapes etc. of the cables and/or other elements may vary.

A detection and/or communication station may look different and comprise apparatus for more or less functions. Plural electrical conductors and/or optical fibres may be integrated into one cable.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

Elements and aspects discussed for or in relation with a particular embodiment may be suitably combined with elements and aspects of other embodiments, unless explicitly stated otherwise.

## Claims

1. A network system comprising an electrical cable and a power source connected to the cable for transmitting electrical power through the cable,
wherein the electrical power cable comprises an electrical conductor and an optical fibre extending along the conductor, wherein in particular the electrical conductor and the optical fibre form an integral cable.

2. The network system according to claim 1, wherein at least part of the optical fibre is included within the conductor, wherein in particular the conductor is provided with a recess wherein the optical fibre is arranged in the recess.

3. The network system according to any preceding claim, wherein at least part of the optical fibre is wound around at least part of the conductor, in particular being covered by and/or being incorporated in a sheath surrounding the conductor.

4. The network system according to any preceding claim, wherein in at least part of the cable is comprised in a power supply line for a transportation system, e.g. forming an overhead power supply line.

5. The network system according to any preceding claim, wherein the system comprises a plurality of electrical conductors each comprising one or more optical fibres extending along the respective conductors, wherein at least two of the electrical conductors form part of a common current loop.

6. The network system according to any preceding claim, wherein the system comprises a plurality of detection stations along the cable, provided with one or more optical detection signal sources and/or optical detection signal detectors operably connected to the optical fibre.

7. The network system according to any preceding claim, wherein the system comprises a plurality of communication stations along the cable, provided with one or more communication signal transmitters and/or communication signal receivers operably connected to the optical fibre, which are preferably configured for communication with a further communication system, in particular a remote communication system, such as a wireless system, e.g. a mobile telecommunications network.

8. The network system according to claims 6 and 7, comprising one or more stations in which a detection station and a communication station are integrated.

9. The network system according to claim 7 or 8,
wherein at least one of the communication signal transmitters and/or the communication signal receivers is formed for transmitting and/or receiving communication signals over different logical communication channels.

10. The network system according to any one of claims 6-9, wherein at least one, preferably each, detection station and/or communication station is assigned an identifier which is unique within the network system, the address preferably being changeable by means of one or more hardware and/or software settings.

11. The network system according to any one of claims 6-10, wherein the system comprises a control unit configured to communicate with one or more detection and/or communication stations, preferably being configured for two-way communication, to determine at least one signal transmission parameter and to generate a control signal in dependency of the determined signal transmission parameter, wherein preferably the control unit is configured for transmitting the control signal to a remote signalling device.

12. The network system according to any preceding claim, comprising a plurality of data warehouses operably connected to the optical fibre for transmission of data from and/or to the respective data warehouses, wherein in particular in a system according to any one of claims 6-12, one or more data warehouse are connected to one or more control units, detection stations and/or communication stations, where applicable.

13. The network system according to any preceding claim, being part of a network comprising one or more client connections and server connections for communication between at least some clients and/or servers connected to the connections via the optical fibre of the cable.

14. Cable for a network system according to any preceding claim, comprising an electrical conductor formed as an overhead power supply line of a transportation system such as a railway, tramway, trolley car or metro, wherein the cable comprises an optical fibre extending along the conductor, the electrical conductor and the optical fibre forming a cable as an integral object,
wherein at least part of the fibre is included within the conductor, and wherein in particular the conductor is provided with a recess and the fibre is arranged in the recess.

15. Use of the network system according to any one of claims 1-13, comprising transmitting an optical signal through the optical fibre, determining a signal transmission parameter and generating a signal in dependency of the determined signal transmission parameter.
